# EUROPÄISCHE PATENTANMELDUNG

(11) **EP 2 207 051 A1**
(43) Veröffentlichungstag der Anmeldung: **14.07.2010**
(21) Anmeldenummer: 09016065.6
(22) Anmeldetag: 23.12.2009
(51) Int. Cl.: G02B 5/18, G02B 5/32, G06K 19/06, B42D 15/00

(54) **Sicherheitselement sowie Verfahren zur Herstellung eines Sicherheitselements**

(30) Priorität: 07.01.2009 DE 102009004251
(71) Anmelder: OVD Kinegram AG, 6301 Zug (CH)
(72) Erfinder: Tomkin, Wayne Robert, Dr., 5400 Baden (CH); Scharfenberg, Michael, 90459 Nürnberg (DE); Brehm, Ludwig, Dr., 91325 Adelsdorf (DE); Schilling, Andreas, Dr., 6332 Hagendorn (ZG) (CH)
(74) Vertreter: Zinsinger, Norbert

(57) **Zusammenfassung**

Die Erfindung betrifft ein Sicherheitselement (3') mit einer Oberseite und einer Unterseite sowie ein Verfahren zur Herstellung desselben. Das Sicherheitselement weist eine transparente Schicht (33') mit nicht homogener Brechzahl auf, in welcher eine Vielzahl von Braggschen Ebenen durch Brechzahlvariation gebildet sind. Die transparente Schicht (33') besitzt eine Schichtdicke von 5 µm bis 200 µm und die transparente Schicht (33') weist eine Vielzahl von ersten Zonen (41) mit einer kleinsten Abmessung von weniger als 300 µm auf, die gemäß einem ersten Raster in einer ein- oder zweidimensionalen Abfolge benachbart zueinander angeordnet sind und in denen jeweils die Braggschen Ebenen der transparenten Schicht zur Ausbildung einer jeweiligen transmissiven optischen Abbildungsfunktion ausgeformt sind.

## Beschreibung

Die Erfindung betrifft ein Sicherheitselement mit einer transparenten Schicht mit nicht homogener Brechzahl sowie ein Verfahren zur Herstellung eines solchen Sicherheitselements.

Es ist bekannt, als Sicherheitselemente zur Sicherung von Sicherheitsdokumenten, beispielsweise Banknoten, Ausweise, Reisepässe, Scheckformulare, Eintrittskarten, Tickets oder Bons, einen Photopolymerfilm zu verwenden, in dessen Volumen Informationen holographisch gespeichert sind. So wird beispielsweise von der EP 1 091 267 A2 ein Sicherheitselement mit einer zwischen zwei Trägerschichten einlaminierten photosensitiven Schicht beschrieben, in welche eine optisch wahrnehmbare Information, insbesondere ein 3D-Hologramm eines Objekts, gespeichert ist und bei Beleuchtung sichtbar wird.

Der Erfindung liegt nun die Aufgabe zugrunde, ein verbessertes Sicherheitselement zur Sicherung von Sicherheitsdokumenten sowie ein Verfahren zur Herstellung eines solchen Sicherheitselements anzugeben.

Diese Aufgabe wird von einem Sicherheitselement mit einer Oberseite und einer Unterseite gelöst, welches eine transparente Schicht mit nicht homogener Brechzahl aufweist, in welcher eine Vielzahl von Braggschen Ebenen durch Brechzahlvariation gebildet sind, wobei die transparente Schicht eine Schichtdicke von 5 µm bis 200 µm besitzt und die transparente Schicht eine Vielzahl von ersten Zonen mit einer kleinsten Abmessung von weniger als 300 µm aufweist, die gemäß einem ersten Raster in einer ein- oder zweidimensionalen Abfolge benachbart zueinander angeordnet sind, und in denen jeweils die Braggschen Ebenen der transparenten Schicht zur Ausbildung einer jeweiligen transmissiven optischen Abbildungsfunktion ausgeformt sind. Die Aufgabe wird weiter von einem Verfahren zur Herstellung eines Sicherheitselements gelöst, bei dem eine photosensitive Schicht mit einer Schichtdicke zwischen 5 µm und 200 µm bereitgestellt wird, die photosensitive Schicht derart belichtet wird, dass in der photosensitiven Schicht eine Vielzahl von ersten Zonen mit einer kleinsten Abmessung von weniger als 300 µm ausgebildet wird, die gemäß einem ersten Raster in einer ein- oder zweidimensionalen Abfolge benachbart zueinander angeordnet sind und in denen jeweils eine Vielzahl von durch Brechzahlvariation gebildeten Braggschen Ebenen zur Ausbildung einer jeweiligen transmissiven Abbildungsfunktion ausgeformt sind und bei dem die photosensitive Schicht sodann ausgehärtet wird.

Im Gegensatz zu bekannten Sicherheitselementen wird gemäß der Erfindung durch die Braggschen Ebenen keine (dreidimensionale) Darstellung eines Objekts oder eine sonstige optisch variable Information generiert, sondern die Braggschen Ebenen sind in einer Vielzahl von unterhalb des Auflösungsvermögens des menschlichen Auges liegenden Bereichen ausgeformt zur Ausbildung von optischen transmissiven Abbildungsfunktionen. Hierdurch lassen sich neuartige optische Effekte generieren, die als optische Sicherheitsmerkmale verwendet werden. Im Weiteren zeichnet sich das erfindungsgemäße Sicherheitsmerkmal dadurch aus, dass es durch galvanisches oder mechanisches Kontakt-Kopieren oder holographisches Kopieren nicht nachgebildet werden kann. Hierdurch wird die Fälschungssicherheit des Sicherheitselements, insbesondere auch im Vergleich zu herkömmlichen refraktiven Linsen, weiter verbessert. Durch die Erfindung wird so ein nur sehr schwer nachahmbares und fälschbares Sicherheitselement zur Sicherung von Sicherheitsdokumenten bereitgestellt, welches trotzdem einfach und kostengünstig industriell gefertigt werden kann.

Vorteilhafte Ausgestaltungen der Erfindung sind in den Unteransprüchen bezeichnet.

Die photosensitive Schicht besteht vorzugsweise aus Photopolymer, SilberHalogenid-Emulsionen, dichromatischer Gelatine.

Gemäß eines bevorzugten Ausführungsbeispiels der Erfindung sind die Braggschen Ebenen der transparenten Schicht in den ersten Zonen zur Ausbildung identischer transmissiver Abbildungsfunktionen ausgebildet. Hierdurch lassen sich insbesondere in Verbindung mit der unten beschriebenen Musterschicht interessante optisch variable Effekte erzielen. Es ist jedoch auch möglich, dass die Braggschen Ebenen der transparenten Schicht in den ersten Zonen zur Ausbildung unterschiedlicher transmissiver Abbildungsfunktionen ausgebildet sind. Hierdurch lassen sich interessante Bewegungseffekte erzielen und makroskopische Informationen in das Sicherheitselement codieren.

Vorzugsweise sind die Braggschen Ebenen der transparenten Schicht in einer ersten Gruppe von ersten Zonen zur Ausbildung identischer ersten transmissiver Abbildungsfunktionen ausgebildet und in einer zweiten Gruppe von ersten Zonen zur Ausbildung identischer zweiter transmissiver Abbildungsfunktionen ausgebildet, wobei die ersten und die zweiten Abbildungsfunktionen unterschiedliche Abbildungsfunktionen sind.

Vorzugsweise ist eine Vielzahl von ersten Zonen der ersten Gruppe benachbart zueinander angeordnet und belegen einen dritten Bereich mit einer kleinsten Abmessung von mehr als 300 µm.

Vorzugsweise ist eine Vielzahl von ersten Zonen der zweiten Gruppe benachbart zueinander angeordnet und belegt einen vierten Bereich mit einer kleinsten Abmessung von mehr als 300 µm.

Vorzugsweise sind die Braggschen Ebenen der transparenten Schicht zur Ausbildung unterschiedlicher transmissiver optischer Abbildungsfunktionen in den ersten Zonen ausgebildet, wobei sich die Abbildungsfunktionen benachbarter ersten Zonen in einer Raumrichtung kontinuierlich ändern.

Vorzugsweise sind die Braggschen Ebenen in den ersten Zonen jeweils parallel zueinander angeordnet und voneinander jeweils zwischen 200 nm und 700nm, vorzugsweise zwischen 260 nm und 460 nm, insbesondere bei einem Brechungsindex des zwischen den Braggschen Ebenen angeordneten Materials von etwa 1,5 beabstandet. Im Weiteren sind die Braggschen Ebenen vorzugsweise in den ersten Zonen jeweils äquidistant voneinander beabstandet angeordnet. Vorzugsweise schließen die Braggschen Ebenen hierbei in den ersten Zonen jeweils einen Winkel zwischen etwa 5° und etwa 45° mit der von der Oberseite des Sicherheitselements aufgespannten Ebene ein. Weiter bevorzugt variiert der Winkel hierbei mit der Tiefe, d.h. abhängig von einer auf der aufgespannten Ebene senkrecht stehenden Richtung. Untersuchungen haben gezeigt, dass bei Einhaltung dieser Bedingungen sich eine besonders gute optische Effizienz der Abbildungsfunktionen erzielen lassen.

Als transmissive Abbildungsfunktion können beispielsweise prismatische Abbildungsfunktionen oder auch positive oder negative Linsenfunktionen in den ersten Zonen ausgebildet werden. Unter prismatischen Abbildungsfunktionen werden optische Abbildungsfunktionen verstanden, welche einer Abbildung durch ein dreiecksförmiges oder trapezförmiges refraktiv wirkendes optisches Element entsprechen, welches aus einem transparenten, sich im Brechungsindex von dem umgebenden Medium unterscheidenden Material besteht. Vorzugsweise wird bei einer prismatischen Abbildungsfunktion das in einem ersten Bereich einfallende Licht in einem positiven Winkel, insbesondere in einem Winkel α, und das in einem zweiten Bereich einfallende Licht in einem negativen Winkel, insbesondere dem Winkel - α, abgelenkt, d.h. in unterschiedliche, entgegen gesetzte Richtungen bezogen auf die Strahlachse abgelenkt. Hierbei kann weiter vorgesehen sein, dass in weiteren Bereichen das einfallende Licht unter einem anderen positiven bzw. negativen Winkel abgelenkt wird und/oder dass erste, zweite und ggf. weitere Bereiche iterativ aufeinander folgen.

Ein Beispiel einer transmissiven optischen Abbildungsfunktion ist beispielsweise 1/F = 1/S₁ + 1/S₂, wobei S₁ die Gegenstandsweite und S₂ die Bildweite darstellt. F kann hierbei eine Konstante sein, jedoch auch ortsabhängig variieren.

Die Ablenkung des einfallenden Lichts durch die optisch transmissive Abbildungsfunktion variiert vorzugsweise in einer Richtung oder in unterschiedlichen Richtungen. So ist es beispielsweise möglich, dass in einer ersten, in der von der Oberseite des Sicherheitselements aufgespannten Ebenen liegenden Richtung die Ablenkung des einfallenden Lichts sich kontinuierlich verändert und in einer zweiten, in der von der Oberseite des Sicherheitselements aufgespannten Ebenen liegenden Richtung, welche vorzugsweise rechtwinkelig auf der ersten Richtung steht, die Ablenkung konstant ist. Weiter ist es auch möglich, dass auch in der zweiten Raumrichtung die Ablenkung kontinuierlich variiert, wie beispielsweise bei einer sphärischen Linsenfunktion. Weiter ist es auch möglich, dass in der ersten Richtung Bereiche mit jeweils konstanter, jedoch zueinander unterschiedlich Ablenkung des einfallenden Lichts aufeinander folgen (prismatische Abbildungsfunktion), und in der zweiten Raumrichtung die Ablenkung konstant ist oder hier ebenfalls Bereiche mit unterschiedlichem Ablenken des einfallenden Lichts aufeinander folgen.

Vorzugsweise entspricht hierbei die erste Richtung der Richtung der kleinsten Abmessung einer Zone.

So ist es beispielsweise möglich, dass in den ersten Zonen jeweils eine Vielzahl von Braggschen Ebenen eine nahezu senkrecht zur Oberseite der transparenten Schicht orientierten Schnittebene in einer Schnittlinie schneidet, die einen kreisbogenförmigen Abschnitt und eine Länge von mehr als 5 µm aufweist, wobei der Kreisdurchmesser des Kreisbogens zwischen 5 µm und 250 µm beträgt. Weiter ist es auch möglich, dass in den ersten Zonen nicht nur eine derartige Schnittebene besteht, sondern eine Vielzahl derartiger Schnittebenen definiert werden können.

Unter kleinster Abmessung einer Zone wird hier die kleinste Abmessung der von der Zone belegten Fläche verstanden, d.h. die kleinste Distanz der Schnittpunkte einer durch den Flächenschwerpunkt der Zone gelegten Geraden mit der Grenzlinie der Zone.

Zur Herstellung eines Sicherheitselements mit einer derart ausgestalteten transparenten Schicht wird gemäß eines bevorzugten Ausführungsbeispiels der Erfindung ein erster Master auf der Vorderseite und ein zweiter Master auf der Rückseite der photosensitiven Schicht angeordnet, und zwar derart, dass der erste Master unmittelbar oder unter Zwischenschaltung eines transparenten optischen Mediums in Kontakt mit der Vorderseite der photosensitiven Schicht gebracht wird und der zweite Master unmittelbar oder unter Zwischenschaltung eines transparenten optischen Mediums in Kontakt mit der Rückseite der photosensitiven Schicht gebracht wird. Das transparente optische Medium kann hierbei auch aus mehreren transparenten Schichten bestehen. Als transparentes optisches Medium können auch Flüssigkeiten verwendet werden, z.B. Öl, Glyzerin oder Wasser. In vorteilhafter Weise hat das transparente optische Medium einen Brechungsindex, welcher nahezu gleich oder nur sehr gering abweichend (z.B. 0,2 bis 0,5) zu dem Brechungsindex der photosensitiven Schicht ist. Anschließend wird die photosensitive Schicht mit einem Interferenzmuster belichtet, welches durch Überlagerung zweier kohärenter Lichtstrahlen gebildet wird. Hierbei ist der erste Master in dem Strahlengang des einen Lichtstrahls und der zweite Master in dem Strahlengang des anderen Lichtstrahls angeordnet, so dass die beiden interferierenden Lichtstrahlen jeweils von dem einen Master bzw. von dem anderen Master beeinflusst sind. Weiter ist es auch möglich, dass der erste Master im Strahlengang des ersten und des zweiten Lichtstrahls angeordnet ist. Es hat sich gezeigt, dass durch eine derartige optische Anordnung die gewünschte Ausformung der Braggschen Ebenen erzielt werden kann und sich die so hergestellte transparente Schicht als besonders fälschungssicher erweist. Zur Ausbildung der Braggschen Ebenen in der photosensitiven Schicht werden zwei Master, die auf den gegenüber liegenden Seiten der photosensitiven Schicht angeordnet sind, verwendet, so dass eine Reproduktion des Sicherheitselements unter Verwendung lediglich eines Masters nicht möglich ist. Weiter ist es auch möglich, dass zur Ausbildung Braggscher Ebenen eine Überlagerung eines ersten Strahls durch den ersten Master von der ersten Seite mit einem zweiten einfachen Strahl, der nicht durch einen zweiten Master abgelenkt oder modifiziert ist, eingesetzt wird.

Als erster und zweiter Master können transparente Master verwendet werden. Es ist jedoch auch möglich, dass als erster Master oder als zweiter Master ein reflektiver Master verwendet wird und so der zweite oder der erste Master im Strahlengang beider Lichtstrahlen, d.h. im Strahlengang des ersten und zweiten Lichtstrahls, angeordnet ist. Als Master können hierbei holographische Master mit einer Volumen-Hologrammschicht verwendet werden. Bevorzugt werden als erster und zweiter Master jedoch Master verwendet, die eine Oberflächenstruktur aufweisen, welche in einer oder mehreren Schichten des jeweiligen Masters abgeformt sind und das einfallende Licht durch Beugung, Reflexion und/oder Brechung beeinflussen. Hierbei ist es auch möglich, dass der erste oder der zweite Master eine Reflexionsschicht aufweist, so dass der erste oder der zweite Master als reflektiver Master wirkt, wie dies bereits oben beschrieben wurde. Dabei kann die Reflexionsschicht auch nur teilweise oberhalb oder unterhalb der Oberflächenstruktur vorgesehen sein. Damit kann beispielsweise erreicht werden, dass die Intensität der Reflexion beeinflusst oder unerwünschte oder störende Bereiche der Oberflächenstruktur in ihrem Reflexionsvermögen vermindert werden kann.

Weiter ist es auch möglich, dass als erster Master ein transmissiver, mit einem Oberflächenrelief versehener Master verwendet wird und als zweiter Master lediglich eine ebene, reflektive Fläche eingesetzt wird oder dass als erster Master ein teiltransparenter Spiegel und als zweiter Master ein mit dem Oberflächenrelief versehener reflektiver Master eingesetzt wird.

Gemäß eines bevorzugten Ausführungsbeispiels der Erfindung sind somit in einer Schicht des ersten Masters eine erste Oberflächenstruktur und in einer Schicht des zweiten Masters eine zweite Oberflächenstruktur abgeformt. Bei der ersten und zweiten Oberflächenstruktur handelt es sich hierbei vorzugsweise um zueinander inverse Oberflächenstrukturen. Invers bedeutet hierbei, dass die Oberflächenstrukturen zueinander an einer parallel zur Oberfläche der photosensitiven Schicht gespiegelten Oberflächenstruktur ausgeformt sind. Durch die Verwendung derartiger inverser Oberflächenstrukturen lassen sich insbesondere in Kombination mit der Ausgestaltung einer der beiden Master als reflektives Master besonders gute Ergebnisse in Bezug auf die erzielbare optische Abbildungsqualität der transparenten Schicht erzielen.

Vorzugsweise ist die erste Oberflächenstruktur von der Oberseite der photosensitiven Schicht zwischen 0 µm und 200 µm und/oder die zweite Oberflächenstruktur von der Unterseite der photosensitiven Schicht zwischen 0 µm und 200 µm beabstandet angeordnet.

Es hat sich bewährt, dass als erste und zweite Oberflächenstruktur diffraktive Oberflächenstrukturen, vorzugsweise mit einer Beabstandung der Strukturelemente von weniger als 1000nm, verwendet werden, wobei die Beabstandung der Strukturelemente und/oder die Flankensteilheit der Strukturelemente in zumindest einer Richtung ausgehend von dem Mittelpunkt jeder ersten Zone zu der Grenzlinie der jeweiligen ersten Zone sich verkleinert bzw. sich erhöht.

So ist es beispielsweise möglich, als erste oder zweite Oberflächenstruktur eine diffraktive Oberflächenstruktur mit asymmetrischen Strukturelementen und einer Beabstandung der einzelnen Strukturelemente zwischen 200 nm und 10 µm zu wählen, die die obigen Bedingungen erfüllt. Vorzugsweise verkleinert sich hierbei die Beabstandung der Strukturelemente und erhöht sich parallel hierzu gleichzeitig die Flankensteilheit der Strukturelemente in zumindest einer Richtung ausgehend von dem Mittelpunkt jeder ersten Zone zu der Grenzlinie der jeweiligen ersten Zone. Hierbei ist es weiter möglich, dass diese Voraussetzung nicht nur für eine Richtung, sondern für zwei Richtungen oder für eine Vielzahl von Richtungen gegeben ist. Hierdurch lassen sich beispielsweise Braggsche Ebenen zur Bereitstellung einer transmissiven Linsenfunktion als transmissive optische Abbildungsfunktion in der ersten Zone einschreiben. Weiter ist es auch möglich, dass als erste oder zweite Oberflächenstruktur eine diffraktive Oberflächenstruktur mit asymmetrischen Strukturelementen und einer Beabstandung der einzelnen Strukturelemente zwischen 200 nm und 10 µm vorgesehen ist, wobei jede erste Zone zumindest zwei Bereiche, einen ersten Bereich und einen zweiten Bereich aufweist, in dem sich die Flankensteilheit der asymmetrischen Strukturelemente unterscheidet. So ist es beispielsweise möglich, dass die Strukturelemente in dem ersten und zweiten Bereich zueinander spiegelsymmetrisch ausgeformt sind, d.h. in dem ersten Bereich die flacheren Flanken der Strukturelemente in zueinander entgegen gesetzten Richtungen orientiert sind. In den ersten und zweiten Bereichen sind die Strukturelemente hierbei vorzugsweise jeweils identisch ausgeformt. Derartige Oberflächenstrukturen eignen sich insbesondere zum Einschreiben von Braggschen Ebenen in die ersten Zonen, die als optische Abbildungsfunktion eine prismatische transmissive optische Abbildungsfunktion bereitstellen. Die einzelnen Strukturelemente sind hierbei in dem ersten Bereich und/oder in dem zweiten Bereich zueinander äquidistant angeordnet, wohingegen sich die Flankenneigung (der flacheren Flanke) im ersten und zweiten Bereich voneinander unterscheidet, insbesondere im ersten Bereich einen positiven Winkel und im zweiten Bereich einen negativen Winkel zu der Flächennormalen der Oberseite der photosensitiven Schicht einschließt.

Vorzugsweise weist die erste und/oder die zweite Oberflächenstruktur eine binäre Oberflächenstruktur mit einer Beabstandung der Strukturelemente im Bereich von 50 nm bis 1000 nm auf. Unter binärer Oberflächenstruktur wird eine Oberflächenstruktur verstanden, die sich aus symmetrischen, an ein Rechteckprofil angenäherten Strukturelementen zusammensetzt. Auch hierbei verkleinert sich vorzugsweise die Beabstandung der Strukturelemente in zumindest einer Richtung ausgehend von dem Mittelpunkt jeder ersten Zone zu der Grenzlinie der jeweiligen ersten Zone. Es ist hierbei auch möglich, dass sich die Beabstandung der Strukturelemente nicht nur in einer Richtung, sondern in zwei oder in eine Vielzahl von Richtungen entsprechend verkleinert.

Weiter ist es auch möglich, dass jede erste Zone zwei Bereiche, einen ersten Bereich und einen zweiten Bereich, aufweist, in denen die Strukturelemente jeweils äquidistant zueinander angeordnet sind und im weiteren sich die Beabstandung der Strukturelemente und/oder die Breite der Strukturelemente im ersten Bereich von dem im zweiten Bereich unterscheidet.

Weiter ist es auch möglich, dass die erste und/oder die zweite Oberflächenstruktur eine Vielzahl von linsenförmigen Strukturen aufweisen. Weiter ist es auch möglich, dass der erste Master und/oder der zweite Master eine Vielzahl von opaken Bereichen und eine Vielzahl von transparenten Bereichen aufweisen und sich die Beabstandung aufeinander folgender opaker Bereiche in zumindest einer Richtung ausgehend von dem Mittelpunkt jeder ersten Zone zu der Grenzlinie der jeweiligen ersten Zone sich verkleinert. Vorzugsweise gilt dies nicht nur für eine Richtung, sondern für zwei Richtungen oder eine Vielzahl von Richtungen.

Weiter ist es auch möglich, dass einer der Master aus einer Vielzahl von lochförmigen oder schlitzförmigen transparenten Bereichen, die von opaken Bereichen oder Bereichen, deren Transmissivität sich von der der lochförmigen oder schlitzförmigen Bereiche unterscheidet, umgeben sind. Vorzugsweise sind die lochförmigen oder schlitzförmigen Bereich hierbei im Register zur Oberflächenstruktur des anderen Masters angeordnet, die beispielsweise wie oben beschrieben asymmetrische Strukturelemente, binäre Strukturelemente oder linsenförmige Strukturelemente aufweist.

Gemäß einem bevorzugten Ausführungsbeispiel der Erfindung sind der erste Master und/oder der zweite Master in Form einer Belichtungswalze ausgebildet, die mit einer optisch aktiven Oberflächenstruktur oder einem Muster von opaken und transparenten Bereichen ausgestattet ist, wie oben beschrieben. Vorzugsweise sind hierbei beide Master als zwei gegenüber liegend angeordnete und synchron laufende Belichtungswalzen ausgestattet. Auf diese Weise lässt sich die nötige Präzision bei der Belichtung der photosensitiven Schicht erzielen. Weiter ist es möglich, dass der erste oder der zweite Master in Form einer Replizierwalze ausgebildet ist, welche eine metallische Oberfläche aufweist, in die eine wie oben beschrieben ausgestaltete Oberflächenstruktur abgeformt ist. Der Einsatz einer solchen Walze hat sich bei der Herstellung des erfindungsgemässen Sicherheitselements bewährt.

Gemäß einem weiteren, alternativen vorteilhaften Ausführungsbeispiel der Erfindung sind der erste Master und/oder der zweite Master in Form einer planen, insbesondere plattenförmigen Belichtungsmaske ausgebildet, die mit einer optisch aktiven Oberflächenstruktur oder einem Muster von opaken und transparenten Bereichen ausgestattet ist, wie oben beschrieben. Vorzugsweise sind hierbei beide Master als zwei gegenüber liegend angeordnete und mechanisch gekoppelte Belichtungsmasken ausgestattet. Die mechanische Kopplung erlaubt ein synchrones vertikales Bewegen beider Belichtungsmasken, um den Abstand zu der photosensitiven Schicht zu verändern und um ein Verschieben der Belichtungsmasken gegeneinander zu verhindern. Auf diese Weise lässt sich die nötige Präzision bei der Belichtung der photosensitiven Schicht erzielen.

Gemäß eines bevorzugten Ausführungsbeispiels der Erfindung weist das Sicherheitselement weiter eine Musterschicht mit einer Vielzahl von zweiten Zonen mit einer kleinsten Abmessung von weniger als 300 µm auf, die gemäß einem zweiten Raster in einer ein- oder zweidimensionalen Abfolge benachbart zueinander angeordnet sind. Jede zweite Zone weist hierbei einen Musterbereich und einen Hintergrundbereich auf, die sich in ihren optischen Eigenschaften unterscheiden und zur Ausbildung einer Codierung ausgeformt sind. Durch die Überlagerung der transparenten Schicht mit einer derart ausgestalteten Musterschicht lassen sich interessante und einprägsame optisch variable Effekte erzielen. Beispiele für derartige Effekte sind Bildwechseleffekte (image flip), 2D-Moire-Effekte, 1 D Moire-Effekte, 3D-Bilder (Stereogramm), sogen. Wackelbilder (auch Wechselbild, Linsenraster-Bild, Lentikular-Bild oder Prismenraster-Bild), Scrambled Indica^{®}.

Vorzugsweise sind die Musterbereiche und die Hintergrundbereiche in den zweiten Zonen zur Ausbildung identischer Codierungen ausgeformt.

Hierdurch lassen sich makroskopische Vergrößerungs- und Verzögerungseffekte der Codierung erzielen, welche in einem optisch variablen Bildeindruck resultieren.

Weiter ist es auch möglich, dass die Musterbereiche und Hintergrundbereiche in einer ersten Gruppe von zweiten Zonen zur Ausbildung identischer erster Codierungen ausgeformt sind und in einer zweiten Gruppe von zweiten Zonen zur Ausbildung identischer zweiter Codierungen ausgebildet sind, wobei die ersten und die zweiten Codierungen unterschiedliche Codierungen sind. Hierdurch lassen sich weitere interessante optische Effekte erzielen. So ist es beispielsweise möglich, nebeneinander liegende, mit unterschiedlichen optisch variablen Informationen belegte Bereiche auszubilden. Vorzugsweise sind hierbei die Vielzahl von zweiten Zonen der ersten Gruppe benachbart zueinander angeordnet und belegen einen ersten Bereich mit einer kleinsten Abmessung von mehr als 300 µm. Eine Vielzahl von zweiten Zonen der zweiten Gruppe sind vorzugsweise ebenfalls benachbart zueinander angeordnet und belegen einen zweiten Bereich mit einer kleinsten Abmessung von mehr als 300 µm.

Vorzugsweise weisen das erste Raster und das zweite Raster einen Winkelversatz von mehr als 0° zueinander auf.

Das erste und das zweite Raster sind vorzugsweise jeweils als periodische Raster mit jeweils einer konstanten Rasterweite in zumindest einer Raumrichtung ausgebildet. Bei den Rastern kann es sich um eindimensionale Rastern handeln, bei denen in eine durch einen Vektor definierte Raumrichtung benachbart zueinander angeordnete Zonen aufeinander folgen. Das erste und zweite Raster kann jedoch auch als zweidimensionales Raster ausgebildet sein, bei dem in zwei unterschiedlichen, durch einen jeweiligen Vektor definierte Richtungen benachbarte Zonen aufeinander folgen. Die beiden Vektoren schließen hierbei einen Winkel von mehr als 0° miteinander ein und sind bevorzugt rechtwinkelig zueinander angeordnet. Bei dem ersten und zweiten Raster kann es sich auch um ein transformiertes Raster handeln, bei dem die das Raster aufspannenden Vektoren schlangenlinienförmig oder kreisförmig transformiert sind.

Gemäß einer bevorzugten Ausführungsform der Erfindung handelt es sich bei dem ersten Rasten und dem zweiten Raster um identische Raster, die jedoch in einem Winkelversatz von ca. 0° bis ca. 45° zueinander angeordnet sind. Hierdurch lassen sich interessante optisch variable Bewegungseffekte erzielen, wobei besonders viele Bewegungseffekte in einem Winkelbereich von etwa 0° bis etwa 2° liegen.

Weiter ist es auch möglich, dass das erste und zweite Raster sich in zumindest einer Raumrichtung in ihrer Rasterweite zwischen 0 % und 5 % unterscheiden. Auch hierdurch lassen sich interessante Bewegungseffekte erzielen.

Der Hintergrundbereich und der Musterbereich können sich dadurch in ihren optischen Eigenschaften voneinander unterscheiden, dass der Musterbereich und der Hintergrundbereich eine unterschiedliche Farbe aufweisen, dass sich der Hintergrundbereich und der Musterbereich in ihrer Transmissivität oder Opazität unterscheiden, dass sich der Musterbereich und der Hintergrundbereich in ihren Reflexionseigenschaften unterscheiden, oder auch dass die Musterschicht eine Schicht aufweist, in der im Hintergrundbereich und im Musterbereich unterschiedliche Oberflächenstrukturen abgeformt sind. Bei derartigen unterschiedlichen Oberflächenstrukturen handelt es sich bevorzugt um unterschiedliche diffraktive Oberflächenstrukturen, die sich beispielsweise in ihrem Azimut, in ihrer Strukturtiefe, in ihrer Spatialfrequenz oder in ihrer Reliefform unterscheiden. Weiter ist es auch möglich, dass in dem Musterbereich und/oder in dem Hintergrundbereich eine Mattstruktur, ein Blaze-Gitter oder eine Beugungsstruktur Nullter Ordnung als Oberflächenstruktur abgeformt sind.

Weiter ist es auch möglich, dass die Musterschicht eine partielle Reflexionsschicht aufweist, die in dem Musterbereich vorgesehen und in dem Hintergrundbereich nicht vorgesehen ist oder in dem Hintergrundbereich vorgesehen und in dem Musterbereich nicht vorgesehen ist. Diese Reflexionsschicht kann weiter noch mit einer Oberflächenstruktur belegt sein, wie dies oben ausgeführt wurde. Es ist möglich, die transparente Schicht in Kontakt mit einer unkodierten Musterschicht zu bringen und die Kodierung in situ durchzuführen. Z.B. kann die transparente Schicht auf eine ID-Karte aufgebracht werden, die eine laserbeschreibbare Schicht aufweist, wobei ein Laser anschließend die laserbeschriftbare Schicht beschreibt, wobei der Laserstrahl entsprechend der durch die Braggschen Ebenen bewirkten optischen Abbildungsfunktion abgelenkt wird.

Vorzugsweise beträgt die Schichtdicke der transparenten Schicht zwischen 20µm und 100 µm.

Im Folgenden wird die Erfindung anhand von mehreren Ausführungsbeispielen unter Zuhilfenahme der beiliegenden Zeichnungen beispielhaft erläutert.
- Fig. 1: zeigt eine Darstellung zur Verdeutlichung der Herstellung eines erfindungsgemässen Sicherheitselements.
- Fig. 2: zeigt eine schematische Schnittdarstellung eines erfindungsgemässen Sicherheitselements.
- Fig. 3: zeigt eine schematische Draufsicht eines Ausschnitts des Sicherheitselements nach Fig. 2.

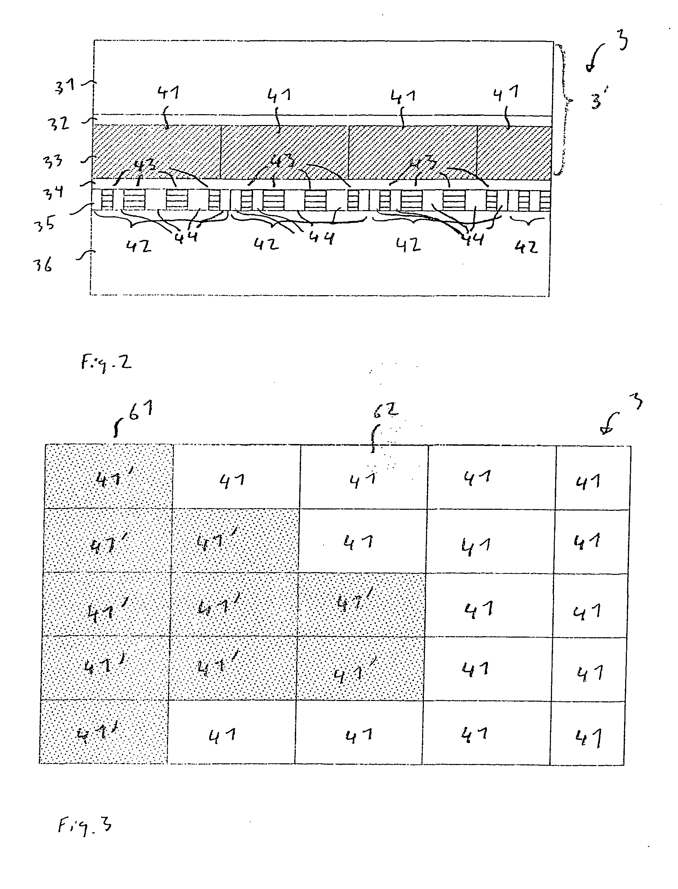

Fig. 2 zeigt ein Sicherheitselement 3 mit einer Trägerschicht 31, einer Haftvermittlerschicht 32, einer transparenten Schicht 33, einer Haftvermittlerschicht 34, einer Musterschicht 35 und einer Kleberschicht 36.

Bei der Trägerschicht 31 handelt es sich vorzugsweise um eine transparente Kunststofffolie einer Dicke zwischen 12 µm und 250 µm, bevorzugt zwischen 19 µm und 120 µm (12 µm bis 23 µm für Banknoten, 20 µm bis 120 µm für ID-Dokumente). Die Kunststofffolie besteht hierbei vorzugsweise aus PET, BOPP, OPP, PC, PEN oder Mylar^{®} (Polyethylenterephthalat-Polyesterfolie von DuPont). Die Oberseite der Trägerschicht 31 kann zusätzlich Schutzschichten aufweisen.

Die Haftvermittlerschichten 32 und 34 haben eine Schichtdicke von 20 nm bis 5 µm. Bei entsprechender Materialwahl der Trägerschicht 31, der transparenten Schicht 33 und der Musterschicht 35 könnte auf die Haftvermittlerschichten 32 und 34 auch verzichtet werden. Weiter dienen die Haftvermittlerschichten 32 und 34 vorzugsweise auch als Barriereschichten, die die transparente Schicht 33 vor Umwelteinflüssen schützen, die ein nachträgliches Quellen oder Schrumpfen der transparenten Schicht 33 und damit eine Änderung der optischen Eigenschaften der transparenten Schicht 33 bewirken könnten. Diese Barriereschicht 34 kann auch nach der Belichtung des Volumenhologramms nachträglich aufgebracht werden.

Anstelle der Haftvermittlerschicht 32 kann auch eine Ablöseschicht vorgesehen werden.

Bei der transparenten Schicht 33 handelt es sich um eine Schicht mit nicht homogener, ortsabhängiger Brechzahl wobei durch dieses dreidimensional ausgebildete Brechzahlmuster eine Vielzahl von Braggschen Ebenen durch Brechzahlvariation in der transparenten Schicht 33 ausgebildet sind. Die transparente Schicht 33 besitzt eine Schichtdicke zwischen 5 µm und 200 µm, weiter bevorzugt eine Schichtdicke von 20 µm und 100 µm. Die Schichtdicke beeinflusst hierbei die Anzahl der in der transparenten Schicht 33 ausgebildeten Braggschen Ebenen und beeinflusst so den durch die transparente Schicht 33 generierten optischen Effekt.

Wie in Fig. 2 angedeutet, weist die transparente Schicht 33 eine Vielzahl von Zonen 41 auf, die gemäß einem Raster in einer Abfolge benachbart zueinander angeordnet sind. Die Zonen 41 sind in dem Ausführungsbeispiel nach Fig. 2 in einem regelmässigen, zweidimensionalen Raster angeordnet, welches durch zwei rechtwinkelig aufeinander stehende Vektoren definiert ist. Die Rasterweiten entlang des einen Vektors und des anderen Vektors sind hierbei vorzugsweise kleiner als 300µm gewählt, weiter bevorzugt kleiner als 100µm gewählt. Weiter ist es auch möglich, dass - wie in Fig. 3 gezeigt - die Rasterweiten entlang des einen Vektors unterschiedlich zu den Rasterweiten entlang des anderen Vektors sind. Wesentlich hierbei ist jedoch, dass für mindestens einen der Vektoren die Rasterweite kleiner als 300 µm ist.

Weiter ist es auch möglich, dass die Zonen 41 lediglich in eine Richtung aufeinander folgen und die Zonen somit beispielsweise eine Breite von 200 µm und eine Länge von mehren mm aufweisen. Dies ist auch der Fall bei einem 1 D-Moire.

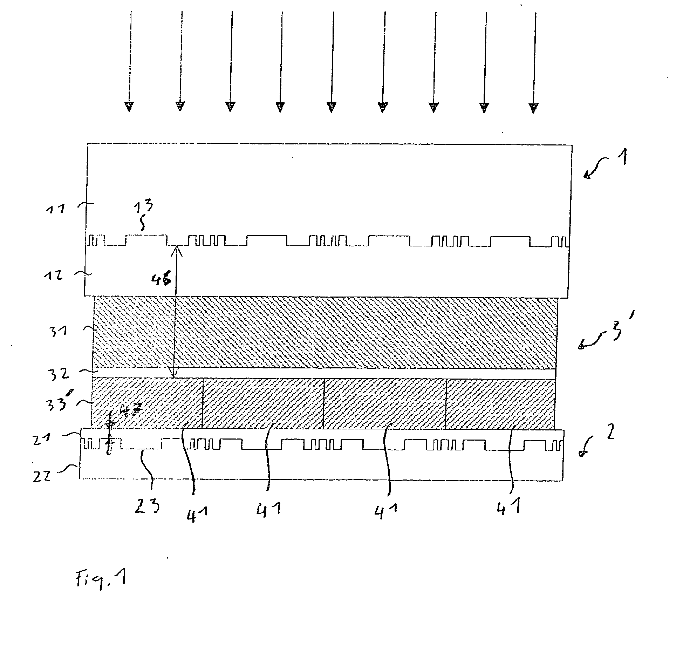

Im Folgenden wird die Herstellung des aus der Trägerschicht 31, der Haftvermittlerschicht 32 und der transparenten Schicht 33 gebildeten Folienkörpers 3' und die detaillierte Ausgestaltung der transparenten Schicht 33 unter Zuhilfenahme von Fig. 1 eingehend erläutert:
Fig. 1 zeigt den Folienkörper 3' mit der Trägerschicht 31, der Haftvermittlerschicht 32 und der noch nicht ausgehärteten transparenten Schicht 33, der Photopolymerschicht 33', sowie zwei Master 1 und 2, die zur Ausformung der gewünschten Anordnung von Braggschen Ebenen in den Zonen 41 der transparenten Schicht 33 dienen.

Zur Herstellung des Folienkörpers 3' wird hierbei wie folgt vorgegangen:
Auf die Trägerschicht 31 wird die Haftvermittlerschicht 32 und sodann eine Photopolymerschicht 33' als photosensitive Schicht vorzugsweise vollflächig mittels Drucken, Gießen, Fließen oder Aufrakeln aufgebracht. Bei dem Photopolymer der Photopolymerschicht handelt es sich um ein Photopolymer, in dem die gewünschten Brechzahländerungen durch Belichtung ausgebildet werden können. Es handelt sich bei dem Photopolymer beispielsweise um das Photopolymer Omni DX 706 der Firma DuPont, welches die genannten Eigenschaften der Brechzahländerung durch Belichtung aufweist. Ein weiteres Beispiel für einen Photopolymer sind SilberHalogenid-Emulsionen, flüssiges Photopolymer oder dichromatische Gelatine.

Nach Aufbringen der Photopolymerschicht 33' auf die Haftvermittlerschicht 32 wird die Photopolymerschicht 33' mittels der in Fig. 1 gezeigten Anordnung belichtet: Die Master 1 und 2 werden beidseits des Folienkörpers 3' mit der Photopolymerschicht 33' angeordnet. Hierzu wird der Folienkörper 3' beispielsweise in einem Stop-and-Go-Betrieb zwischen zwei flächige Master gelegt oder auch im kontinuierlichen Betrieb zwischen zwei als Belichtungswalzen ausgebildete Master 1 und 2 angeordnet. Der Master 1 ist als ein in Transmission wirkender Master und der Master 2 als ein in Reflexion wirkender Master ausgebildet. Der Master 1 weist Schichten 11 und 12 auf, zwischen denen eine Oberflächenstruktur 13 ausgeformt ist. Die Schichten 11 und 12 bestehen aus unterschiedlichen Materialien, die sich in ihrem optischen Brechungsindex um mehr als 0,2 unterscheiden, vorzugsweise um mehr als 0,5. Bei den Schichten 11 und 12 handelt es sich so beispielsweise um zwei Kunststoffschichten, die sich in ihrem Brechungsindex unterscheiden und deren Grenzfläche die Oberflächenstruktur 13 ausformt. Weiter ist es jedoch auch möglich, dass zwischen den Schichten 11 und 12 eine HRI-Schicht oder eine LRI-Schicht oder eine Abfolge von mehreren HRI-Schichten und LRI-Schichten angeordnet sind, in deren Grenzfläche zu der Schicht 11 und/oder der Schicht 12 die Oberflächenstruktur 13 abgeformt ist (HRI = High Refraction Index; LRI = Low Refraction Index). Als Material für die HRI- oder LRI-Schichten werden vorzugsweise anorganische Materialien, beispielsweise MgF₂, SiₓO_{y}, TiO₂, ZnS verwendet. In diesem Fall ist es dann auch möglich, dass die Schichten 11 und 12 aus dem gleichen Material bestehen oder aus Materialien bestehen, die im Wesentlichen denselben Brechungsindex besitzen. Es ist auch möglich, dass die Schicht 11 fehlt. Dann grenzt der Master an Luft.

Der Master 2 weist eine Schicht 21 und eine Schicht 22 auf. Bei der Schicht 21 handelt es sich um eine im Bereich der für die Belichtung verwendeten Wellenlänge transparente Schicht. Bei der Schicht 22 handelt es sich um eine Reflexionsschicht, vorzugsweise um eine metallische Reflexionsschicht. In die Oberfläche der Schicht 22 ist eine Oberflächenstruktur 23 abgeformt, welche die Grenzschicht zwischen der Schicht 21 und 22 bildet.

Weiter ist es auch möglich, auf die Schicht 21 zu verzichten, so dass die Oberfläche der Reflexionsschicht 22 in direktem Kontakt mit der Photopolymerschicht 33' ist.

Bei den Oberflächenstrukturen 13 und 23 handelt es sich um binäre Oberflächenstrukturen, deren Strukturelemente nahezu rechteckförmig sind und deren Strukturtiefe im Bereich von 100 nm bis 1000 nm liegt. Die Beabstandung der Strukturelemente der Oberflächenstrukturen 13 und 14 liegt im Bereich zwischen 50 und 1000 nm, bevorzugt zwischen 100 nm und 300 nm. Im Weiteren sind die in dem Master 1 und in dem Master 2 ausgeformten Oberflächenstrukturen 13 und 14 passergenau zueinander angeordnet und als zueinander inverse Oberflächenstrukturen ausgeformt. Dies ist beispielsweise in Fig. 1 dargestellt, wo erkennbar ist, dass die Oberflächenstruktur 23 der an der Oberfläche der Photopolymerschicht 33' gespiegelten Oberflächenstruktur 13 entspricht. Weiter sind die Oberflächenstrukturen 13 und 23 im Register zu den Zonen 41 ausgerichtet. Wie in Fig. 1 erkennbar sind die Oberflächenstrukturen 13 und 23 hierbei als zur Mittellinie der jeweiligen Zone 41 symmetrische Struktur ausgebildet, wobei die Beabstandung der Strukturelemente sowie auch die Breite der Strukturelemente ausgehend von dem Mittelpunkt der Zonen 41 zu der Grenzlinie der jeweiligen Zone 41 mit der benachbarten Zone abnimmt. Weiterhin ist es auch möglich, dass die Oberflächenstrukturen 13 und 23 jeweils punktsymmetrisch zum Mittelpunkt der Zonen 41 ausgebildet sind.

Anstelle der Verwendung binärer Oberflächenstrukturen ist es auch möglich, wie bereits oben ausgeführt, asymmetrisch diffraktive Strukturen oder auch refraktive Strukturen zu verwenden. Im Weiteren ist es auch möglich, in unterschiedlichen Zonen 41 unterschiedliche Oberflächenstrukturen im ersten und im zweiten Master vorzusehen, wobei auch in diesem Fall die Oberflächenstrukturen des ersten und zweiten Masters als inverse Oberflächenstrukturen ausgebildet sind. Es ist auch möglich, dass die Oberflächenstrukturen 13 oder 23 flach sind, d.h. Master 2 ist ein Spiegel oder Master 1 fehlt.

Die Schichten 12 und 21 des ersten Masters bzw. zweiten Masters dienen im Weiteren auch als Distanzschicht, so dass die dem ersten Master zugewandte Oberseite der Photopolymerschicht 33' eine Distanz 46 von der Oberflächenstruktur 13 und die dem Master 2 zugewandte Unterseite der Photopolymerschicht 33' eine Distanz 47 von der Oberflächenstruktur 23 besitzt. Vorzugsweise weist die Distanz 46 einen Wert von 10 µm bis 200 µm und die Distanz 47 einen Wert von 0 µm bis 100 µm auf. Als Schichten 12 und 21 können auch Flüssigkeiten verwendet werden, z.B. Öl, Glyzerin oder Wasser. In vorteilhafter Weise haben die Schichten 12 und 21 einen Brechungsindex, welcher nahezu gleich oder nur sehr gering abweichend (z.B. 0,2 bis 0,5) zu dem Brechungsindex Photopolymerschicht 33' ist.

Die in Fig. 1 gezeigte Anordnung wird nun mit kohärentem Licht belichtet. Hierzu wird ein Lichtstrahl einer entsprechenden geeigneten Lichtquelle, beispielsweise eines Lasers, auf eine geeignete Dicke entsprechend aufgeweitet und so die in Fig. 1 gezeigte Wellenform generiert. Der aufgeweitete Lichtstrahl durchläuft den zwischen der Photopolymerschicht 33' und der Lichtquelle angeordneten Master 1, wird vom Master 1 gemäß der Oberflächenstruktur 3 abgelenkt, durchläuft die Photopolymerschicht 33' und wird von der in die Reflexionsschicht 22 abgeformten Oberflächenstruktur 23 entsprechend der Oberflächenstruktur 23 zurück gebeugt und durchläuft sodann wiederum die Photopolymerschicht 33'. In der Photopolymerschicht 33' bildet sich so ein durch die Überlagerung dieser Lichtstrahlen gebildetes Interferenzmuster aus, welches in der Photopolymerschicht 33' ein entsprechendes dreidimensionales Muster mit Bereichen unterschiedlichen Brechungsindex ausbildet.

Nach Abschluss des Belichtungs-Prozesses wird das Photopolymer-Material der Photopolymerschicht 33' beispielsweise durch Bestrahlung mit UV-Licht, oder durch Elektronenstrahl polymerisiert und damit ausgehärtet.

Sodann wird auf die so gebildete transparente Schicht 33 die Haftvermittlerschicht 34 und die Musterschicht 35 aufgebracht. Alternativ dazu kann die Haftvermittlerschicht oder Barriereschicht 34 und dann die Kleberschicht aufgebracht werden. Die Folie wird anschließend auf die Musterschicht 35 aufgebracht.

Die Musterschicht 35 besteht aus ein oder mehreren Schichten, welche partiell ausgeformt sind und Musterbereiche 43 sowie Hintergrundbereiche 44 ausbilden, die sich in ihren optischen Eigenschaften unterscheiden. Wie beispielsweise in Fig. 2 gezeigt, weist die Musterschicht 35 hierbei eine Vielzahl von Zonen 42 mit einer kleinsten Abmessung von weniger als 300 µm auf, die gemäß einem Raster in einer ein- oder zweidimensionalen Abfolge benachbart zueinander angeordnet sind und die jeweils über einen Musterbereich 43 und einen Hintergrundbereich 44 verfügen, die eine Codierung ausformen. Das Raster der Musterschicht 35 kann entsprechend wie oben für das Raster der transparenten Schicht 33 beschrieben ausgebildet sein. Die durch die Musterbereiche 43 und Hintergrundbereiche 44 ausgebildeten Codierungen in den Zonen 42 sind vorzugsweise identische Codierungen, es ist jedoch auch möglich, dass sich die Codierungen in benachbarten Zonen 42 unterscheiden.

Bei dem Ausführungsbeispiel nach Fig. 2 handelt es sich bei der Musterschicht 35 um eine partiell metallisierte Schicht, wobei das Metall der Metallschicht in den Musterbereichen 43 vorgesehen und in den Hintergrundbereichen 44 nicht vorgesehen ist. Es ist jedoch auch möglich, dass die unterschiedlichen optischen Eigenschaften der Musterschicht 35 durch unterschiedliche Reflexionseigenschaften, unterschiedliche Farben oder unterschiedliche optisch variable Effekte in den Musterbereichen 43 und den Hintergrundbereichen 44 erzielt werden.

Anschließend wird auf die Musterschicht 35 die Kleberschicht 36, vorzugsweise in einer Schichtdicke zwischen 0,5 µm und 4 µm aufgebracht.

In dem Ausführungsbeispiel nach Fig. 2 und Fig. 3 sind in den Zonen 41 und 41' die Braggschen Ebenen der transparenten Schicht zu unterschiedlichen transmissiven Abbildungsfunktionen ausgeformt. Hier unterscheidet sich beispielsweise die Beabstandung der Strukturelemente und die Breite der Strukturelemente der Oberflächenstrukturen 13 und 23 in den Zonen 41 und 41'. Die Zonen 41' bilden eine Gruppe 61 von benachbarten Zonen aus und die Zonen 41 bilden eine Gruppe 62 von benachbarten Zonen aus. Die Codierung der Bereiche 42 ist bei diesem Ausführungsbeispiel identisch gewählt und die Rasterweite des Rasters der transparenten Schicht 33 und der Musterschicht 35 unterscheidet sich von 0 µm bis 15 µm. Für den menschlichen Betrachter entsteht sowohl in dem Bereich der Gruppe 61 als auch in dem Bereich der Gruppe 62 eine optisch variable, vergrößerte Darstellung der Codierung, wobei sich der optisch variable Effekt im Bereich der Gruppe 61 von dem der Gruppe 62 unterscheidet, so dass ein äusserst markantes und einprägsames Sicherheitsmerkmal für den menschlichen Betrachter generiert wird.

Gemäß einer weiteren Ausführungsalternative sind die Musterschicht 35 und die transparente Schicht 33 Teil eines Laminats, beispielsweise einer ID-Karte. Hierzu wird auf einem Substrat die Musterschicht 35 aufgebracht und das Substrat mit einer optionalen transparenten Schicht versehen und sodann die transparente Schicht 33 (ggf. mit den Schichten 31 und 32) mittels einer Kleberschicht registergenau zu der Musterschicht 35 auf der transparenten Schicht bzw. der Musterschicht 35 fixiert. Anschließend wird eine Schutzschicht, insbesondere eine Kunststofffolie auf den so gebildeten Folienkörper aufgelegt und dann in einem Laminater der sich so ergebende Folienkörper beispielsweise zu einer ID-Karte laminiert.

Weiter ist es auch möglich, dass die transparente Schicht 33, ggf. mit den Schichten 31 und 32, auf der einen Seite eines transparenten Trägersubstrats appliziert wird und auf der anderen Seite des Trägersubstrats die Musterschicht 35 aufgebracht wird. Bei dem Träger handelt es sich vorzugsweise um den Träger einer Banknote, der zumindest in dem Bereich, in dem die transparente Schicht 33 appliziert ist, transparent ausgebildet ist, beispielsweise um den Träger eine Polymer-Banknote.

Gemäß eines weiteren Ausführungsbeispiels der Erfindung wird die transparente Schicht 33, ggf. mit den Schichten 31 und 32, auf ein bieg- oder faltbares Trägersubstrat appliziert und die Musterschicht 35 auf einen anderen Bereich des Trägersubstrats appliziert. Durch Falten oder Knicken des Trägersubstrats können die transparente Schicht 33 und die Musterschicht 35 sodann in Überdeckung gebracht werden, wodurch dann ein optisch variabler Effekt sichtbar wird. Vorzugsweise ist hierbei das Trägersubstrat ebenfalls transparent ausgebildet und die transparente Schicht 33 einerseits und die Musterschicht 35 andererseits auf gegenüberliegenden Seiten des Trägersubstrats appliziert.

## Patentansprüche

1. Sicherheitselement (3) mit einer Oberseite und einer Unterseite, wobei das Sicherheitselement (3) eine transparente Schicht (33) mit nicht homogener Brechzahl aufweist, in welcher eine Vielzahl von Braggschen Ebenen durch Brechzahlvariation gebildet sind, wobei die transparente Schicht (33) eine Schichtdicke von 5 µm bis 200 µm besitzt und wobei die transparente Schicht (33) eine Vielzahl von ersten Zonen (41) mit einer kleinsten Abmessung von weniger als 300 µm aufweist, die gemäß einem ersten Raster in einer ein- oder zweidimensionalen Abfolge benachbart zueinander angeordnet sind und in denen jeweils die Braggschen Ebenen der transparenten Schicht zur Ausbildung einer jeweiligen transmissiven optischen Abbildungsfunktion ausgeformt sind.

2. Sicherheitselement (3) nach Anspruch 1,
**dadurch gekennzeichnet,**
**dass** das Sicherheitselement eine Musterschicht mit einer Vielzahl von zweiten Zonen (42) mit einer kleinsten Abmessung von weniger als 300 µm aufweist, die gemäß einem zweiten Raster in einer ein- oder zweidimensionalen Abfolge benachbart zueinander angeordnet sind, wobei jede zweite Zone (42) einen Musterbereich (43) und einen Hintergrundbereich (44) aufweist, die sich in ihren optischen Eigenschaften unterscheiden und zur Ausbildung einer Codierung ausgeformt sind und
**dass** insbesondere die Musterbereiche (43) und die Hintergrundbereiche (44) in einer ersten Gruppe von zweiten Zonen (42) zur Ausbildung identischer erster Codierungen ausgeformt sind und in einer zweiten Gruppe von zweiten Zonen (42) zur Ausbildung identischer zweiter Codierungen ausgeformt sind, wobei die ersten und die zweiten Codierungen unterschiedliche Codierungen sind.

3. Sicherheitselement (3) nach Anspruch 2,
**dadurch gekennzeichnet,**
**dass** der Musterbereich (43) und der Hintergrundbereich (44) sich in ihrer Farbe oder Transmissivität oder Opazität oder Reflexionseigenschaften unterscheiden.

4. Sicherheitselement (3) nach einem der Ansprüche 2 bis 3,
**dadurch gekennzeichnet,**
**dass** die Musterschicht eine Schicht aufweist, in die eine Oberflächenstruktur, insbesondere eine diffraktive Oberflächenstruktur, abgeformt ist.

5. Sicherheitselement (3) nach einem der Ansprüche 2 bis 4,
**dadurch gekennzeichnet,**
**dass** die Musterschicht (33) eine partielle Reflexionsschicht aufweist, die in den Musterbereichen (43) vorgesehen ist und in den Hintergrundbereichen (44) nicht vorgesehen ist, oder die in den Hintergrundbereichen (44) vorgesehen ist und in den Musterbereichen (43) nicht vorgesehen ist.

6. Sicherheitselement (3) nach einem der vorhergehenden Ansprüche,
**dadurch gekennzeichnet,**
**dass** die Braggschen Ebenen in den ersten Zonen (41) jeweils parallel zueinander angeordnet und voneinander jeweils zwischen 200 nm und 700 nm beabstandet sind, wobei die Braggschen Ebenen in den ersten Zonen (41) insbesonders jeweils äquidistant voneinander beabstandet sind und/oder die Braggschen Ebenen in den ersten Zonen (41) jeweils insbesonders einen Winkel zwischen 5° und 45° mit der von der Oberseite des Sicherheitselements aufgespannten Ebene einschließen.

7. Sicherheitselement (3) nach einem der vorhergehenden Ansprüche,
**dadurch gekennzeichnet,**
**dass** die Braggschen Ebenen der transparenten Schicht (33) in einer ersten Gruppe (61) von ersten Zonen (41) zur Ausbildung identischer ersten transmissiver Abbildungsfunktionen ausgebildet sind und in einer zweiten Gruppe (62) von ersten Zonen (41) zur Ausbildung identischer zweiter transmissiver Abbildungsfunktionen ausgebildet sind, wobei die ersten und die zweiten Abbildungsfunktionen unterschiedliche Abbildungsfunktionen sind.

8. Sicherheitselement (3) nach Anspruch 7,
**dadurch gekennzeichnet,**
**dass** eine Vielzahl von ersten Zonen (41) der ersten Gruppe (61) benachbart zueinander angeordnet sind und einen dritten Bereich mit einer kleinsten Abmessung von mehr als 300 µm belegen und/oder dass eine Vielzahl von ersten Zonen (41) der zweiten Gruppe (62) benachbart zueinander angeordnet sind und einen vierten Bereich mit einer kleinsten Abmessung von mehr als 300 µm belegen.

9. Sicherheitselement (3) nach einem der Ansprüche 1 bis 6,
**dadurch gekennzeichnet,**
**dass** die Braggschen Ebenen der transparenten Schicht (33) zur Ausbildung unterschiedlicher transmissiver optischer Abbildungsfunktionen in den ersten Zonen (41) ausgebildet sind, wobei sich die Abbildungsfunktionen benachbarter ersten Zonen (41) in einer Raumrichtung kontinuierlich ändern.

10. Sicherheitselement (3) nach einem der vorhergehenden Ansprüche,
**dadurch gekennzeichnet,**
**dass** in den ersten Zonen (41) jeweils eine Vielzahl von Braggschen Ebenen eine senkrecht zur Oberseite der transparenten Schicht (33) orientierte Schnittebene in einer Schnittlinie schneidet, die einen kreisbogenförmigen Abschnitt einer Länge von mehr als 5 µm aufweist, wobei der Kreisdurchmesser des Kreisbogens zwischen 5 und 250 µm beträgt.

11. Sicherheitselement (3) nach einem der Ansprüche 2 bis 10,
**dadurch gekennzeichnet,**
**dass** das erste Raster und das zweite Raster einen Winkelversatz von mehr als 0° zueinander aufweisen und/oder dass das erste Raster und das zweite Raster sich in zumindest einer Raumrichtung in ihrer Rasterweite zwischen 0 und 5 % unterscheiden.

12. Verfahren zur Herstellung eines Sicherheitselement (3) umfassend die Schritte:
- Bereitstellen einer photosensitiven Schicht (33) in einer Schichtdicke zwischen 5 µm und 200 µm,
- Belichten der photosensitiven Schicht (33) derart, dass in der photosensitiven Schicht (33) eine Vielzahl von ersten Zonen (41) mit einer kleinsten Abmessung von weniger als 300 µm ausgebildet wird, die gemäß einem ersten Raster in einer ein-oder zweidimensionalen Abfolge benachbart zueinander angeordnet sind und in denen jeweils eine Vielzahl von durch Brechzahlvariation gebildeter Braggscher Ebenen zur Ausbildung einer jeweiligen transmissiven optischen Abbildungsfunktion ausgeformt sind, und
- Aushärtung der photosensitiven Schicht (33).

13. Verfahren zur Herstellung eines Sicherheitselements (3) nach Anspruch 12,
**dadurch gekennzeichnet,**
**dass** ein erster Master (1) auf der Vorderseite und ein zweiter Master (2) auf der Rückseite der photosensitiven Schicht (33) derart angeordnet wird, dass der erste Master (1) unmittelbar oder unter Zwischenschaltung eines transparenten optischen Mediums (31, 32) in Kontakt mit der Vorderseite der photosensitiven Schicht (33) gebracht wird, und der zweite Master (2) unmittelbar oder unter Zwischenschaltung eines transparenten optischen Mediums in Kontakt mit der photosensitiven Schicht (33) gebracht wird, und dass die photosensitive Schicht (33) mit einem Interferenzmuster belichtet wird, welches durch die Überlagerung zweier kohärenter Lichtstrahlen gebildet wird, wobei der erste Master (1) in dem Strahlengang des einen Lichtstrahls und der zweite Master (2) in dem Strahlengang des anderen Lichtstrahls angeordnet ist, wobei der erste Master (1) insbesonders im Strahlengang des ersten und des zweiten Lichtstrahls angeordnet ist.

14. Verfahren zur Herstellung eines Sicherheitselements nach Anspruch 13,
**dadurch gekennzeichnet,**
**dass** in einer Schicht (11) des ersten Masters (1) eine erste Oberflächenstruktur (13) und/oder in einer Schicht (22) des zweiten Masters (2) eine zweite Oberflächenstruktur (23) abgeformt ist, wobei die erste Oberflächenstruktur (13) von der Oberseite der photosensitiven Schicht (33) insbesondere zwischen 0 µm und 200 µm beabstandet angeordnet wird und die erste und die zweite Oberflächenstruktur (13, 23) insbesondere zueinander inverse Oberflächenstrukturen sind.

15. Verfahren zur Herstellung eines Sicherheitselements nach Anspruch 14,
**dadurch gekennzeichnet,**
**dass** die erste und die zweite Oberflächenstruktur (13, 23) diffraktive Oberflächenstrukturen mit einer Beabstandung der Strukturelemente von weniger als 1000 nm sind, wobei die Beabstandung der Strukturelemente und/oder die Flankensteilheit der Strukturelemente in zumindest einer Richtung ausgehend von dem Mittelpunkt der jeweiligen ersten Zone zu der Grenzlinie der jeweiligen ersten Zone sich verkleinert bzw. sich erhöht, oder dass die erste und die zweite Oberflächenstruktur (13, 23) binäre Oberflächenstrukturen mit einer Beabstandung der Strukturelemente von weniger als 1000 nm sind und sich die Beabstandung der Strukturelemente in zumindest einer Richtung ausgehend von dem Mittelpunkt der jeweiligen ersten Zone zu der Grenzlinie der jeweiligen ersten Zone verkleinert.
